# EUROPEAN PATENT APPLICATION

(11) **EP 2 031 871 A2**
(43) Date of publication of application: **04.03.2009**
(21) Application number: 08158555.6
(22) Date of filing: 19.06.2008
(51) Int. Cl.: H04N 5/44

(54) **Display control method, and display apparatus and display system using the same**

(30) Priority: 30.08.2007 KR 20070087526
(71) Applicant: Samsung Electronics Co., Ltd., Suwon-si, Gyeonggi-do (KR)
(72) Inventor: Cho, Cheon-yong, Gyeonggi-do (KR); Baek, Joung-hum, Gyeonggi-do (KR); Choi, Jin-wook, Gyeonggi-do (KR); Jin, Sung-gon, Gyeonggi-do (KR)
(74) Representative: D'Halleweyn, Nele Veerle Trees Gertrudis

(57) **Abstract**

A display control method, and a display apparatus and display system using the method are provided. The display control method includes detecting a command to change to multi-screen display mode, and displaying a video corresponding to a video signal having a resolution changed according to the size of a split screen of a display on the split screen, if the command is detected. Therefore, it is possible to change a resolution of a video to a resolution most suitable for display on the split screen.

## Description

This application claims priority from Korean Patent Application No. 10-2007-0087526, filed on August 30, 2007, in the Korean Intellectual Property Office, the disclosure of which is incorporated herein by reference in its entirety.

The present invention relates to a display control method, a display apparatus and a display system, and more particularly, to controlling a display by changing a resolution of a video output from a personal computer (PC), a display apparatus, and a display system.

Recent display apparatuses support split screen display functions, such as a picture-in-picture (PIP) function or a picture-by-picture (PBP) function.

The PIP function allows one program to be displayed on a full screen at the same time as one or more other programs are displayed in inset windows. The PBP function allows two programs to be shown side-by-side on a full screen. PCs and television (TV) tuners may be connected to display apparatuses so that users can view two screens simultaneously.

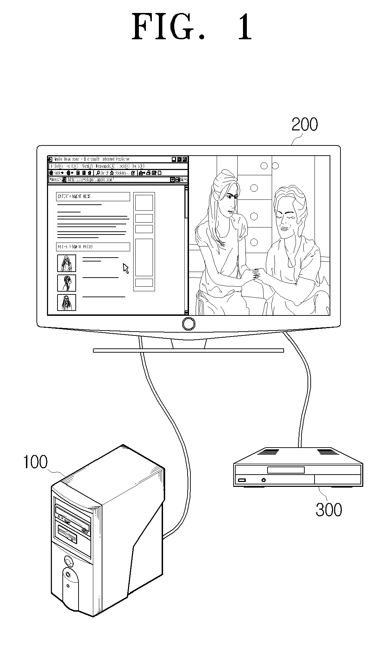

FIG. 1 is a view showing a PC 100 and a set-top box 300 connected to a monitor 200 so that a PC screen and a TV screen are simultaneously displayed in PBP mode. In FIG. 1, a full screen is divided into two screens, namely, left and right screens, in PBP mode. In this situation, if the width of one of the two screens is reduced on the monitor 200, the image may not be fully displayed, and the image quality may be reduced.

Accordingly, in order to have a clear screen on the monitor 200, users need to change a resolution of the PC screen every time the PBP mode is activated. Additionally, when the PBP mode is deactivated, users may need to change the resolution again, resulting in inconvenience to the user.

The method of the invention is distinguished by the features of claim 1.

The apparatus of the invention is distinguished by the features of claim 10.

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a display control method, and a display apparatus and display system using the method, in which a resolution of a video to be displayed may be changed to an optimum resolution according to the size of the screen on which it is to be displayed every time a user changes the mode of the display apparatus. Accordingly, the user does not need to change the resolution of the video every time the user changes the mode of the display apparatus to a PBP mode or changes the PBP mode to a general mode. Additionally, the mode of the display apparatus may be changed, even when the resolution most suitable for the PBP mode is not supported by a graphics card so that it is impossible to manually change the mode of the display apparatus.

According to an aspect of the present invention, there is provided a display control method comprising detecting a command to change to multi-screen display mode; and displaying a video corresponding to a video signal having a resolution changed according to the size of a split screen of a display on the split screen, if the command is detected.

The multi-screen display mode may enable a first video corresponding to a first video signal received from one source and a second video corresponding to a second video signal received from another source to be displayed separately on the display.

The multi-screen display mode may be a picture-by-picture (PBP) mode which causes the first video and the second video to be displayed on the left- and right- hand of a full screen, respectively.

The displaying may comprise displaying the first video with a horizontal resolution of the first video signal changed to half a horizontal resolution of the display on the split screen.

The first video signal may be a signal generated by a computer, and the second video signal may be generated by a broadcast signal receiving apparatus.

The displaying may comprise receiving the video signal having the resolution changed according to the size of the split screen of the display from an external source and displaying the video corresponding to the received video signal on the split screen, if the command is detected.

The displaying may comprise receiving a video signal from an external source, changing the resolution of the video signal and displaying a video corresponding to the received video signal on the split screen.

The method may further comprise displaying a selection menu through which a user may determine whether to change a resolution according to the size of the split screen, if the command is detected. The displaying of the video may comprise displaying the video corresponding to the video signal having the resolution changed according to the size of the split screen on the split screen, if the user determines to change a resolution through the selection menu.

According to another aspect of the present invention, there is provided a display system comprising a display apparatus which displays a video corresponding to a video signal; and a host device which detects a command to change to multi-screen display mode, generates a video signal having a resolution changed according to the size of a split screen of the display apparatus, and controls the generated video signal to be displayed on the split screen if the command is detected.

The display apparatus may provide a selection menu through which a user may determine whether to change a resolution according to the size of the split screen, if the command is detected. The host device may control the video signal having the resolution changed according to the size of the split screen to be displayed on the split screen, if the user determines to change a resolution through the selection menu.

According to another aspect of the present invention, there is provided a display apparatus comprising a video signal receiver which receives a video signal; and a controller which detects a command to change to multi-screen display mode, and controls a video signal having a resolution changed according to the size of a split screen of a display to be displayed on the split screen if the command is detected.

The display apparatus may further comprise an on-screen-display (OSD) generator which provides a selection menu through which a user may determine whether to change a resolution according to the size of the split screen, if the command is detected. The controller may control the video signal having the resolution changed according to the size of the split screen to be displayed on the split screen, if the user determines to change a resolution through the selection menu of the OSD generator.

### BRIEF DESCRIPTION OF THE DRAWINGS

The above and/or other aspects of the present invention will be more apparent by describing certain exemplary embodiments of the present invention with reference to the accompanying drawings, in which:

FIG. 1 is a view of a system to which the present invention is applicable;

FIG. 2 is a detailed block diagram showing the system of FIG. 1;

FIG. 3 is a flowchart explaining a resolution setting method according to an exemplary embodiment of the present invention;

FIGS. 4A and 4B are views showing examples of a multi-split screen according to an exemplary embodiment of the present invention;

FIG. 5 is a flowchart explaining a resolution setting method according to another exemplary embodiment of the present invention;

FIG. 6 is a block diagram showing a host device according to another exemplary embodiment of the present invention;

FIG. 7 is a flowchart explaining a resolution setting method according to yet another exemplary embodiment of the present invention; and

FIG. 8 is a block diagram showing a system in which the resolution setting method according to still another exemplary embodiment of the present invention is used.

### DETAILED DESCRIPTION OF EXEMPLARY EMBODIMENTS

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in excessive detail since they would obscure the invention unnecessarily.

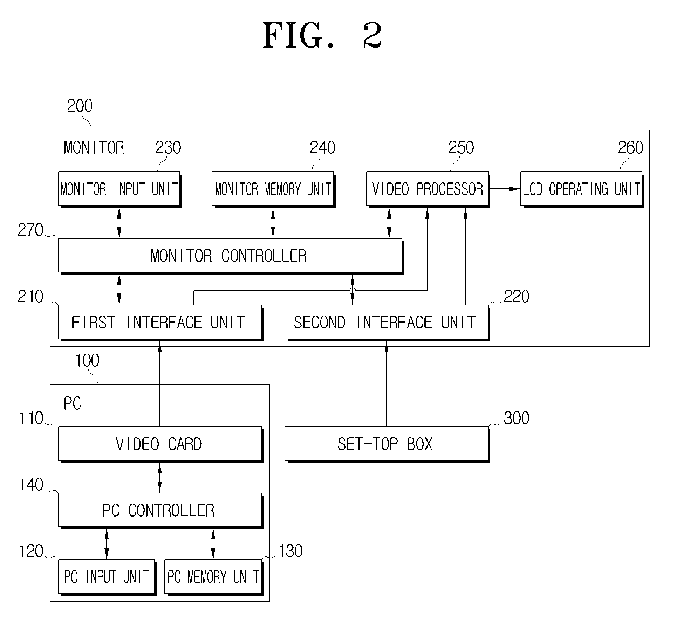

FIG. 2 is a detailed block diagram of a system comprising a PC 100, a monitor 200 and a set-top box 300.

The PC 100 of FIG. 2 comprises a video card 110, a PC input unit 120, a PC memory unit 130 and a PC controller 140.

The video card 110 is a device which generates a video signal and transmits the generated video signal to the monitor 200 so that the video signal is displayed on the monitor 200.

The PC input unit 120 is used to receive commands from users, and may generally be implemented as a keyboard or a mouse.

The PC memory unit 130 is a storage medium which stores programs, data and information required for the PC controller 140 to control operations of the PC 100.

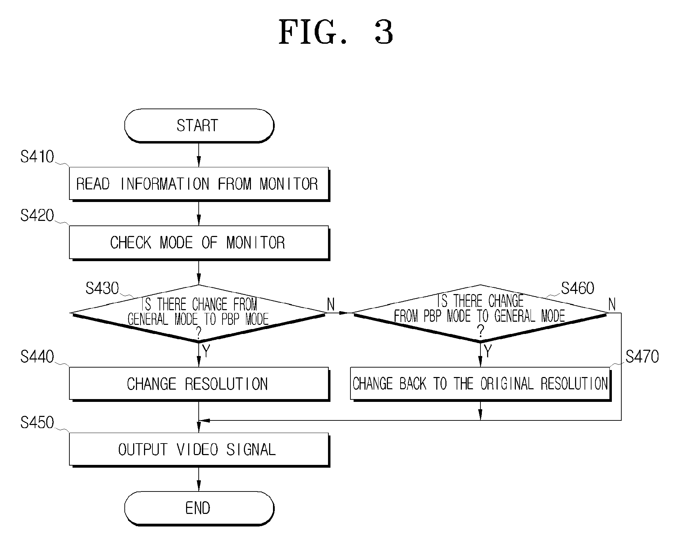

The PC controller 140 controls the video card 110, PC input unit 120 and PC memory unit 130. In more detail, the PC controller 140 determines whether the monitor 200 is in PBP mode. If it is determined that the monitor 200 is in PBP mode, the PC controller 140 may control the video card 110 to change a resolution of the video signal transmitted to the monitor 200. This process of changing resolution will be described in detail with reference to FIG. 3.

The monitor 200 of FIG. 2 comprises a first interface unit 210, a second interface unit 220, a monitor input unit 230, a monitor memory unit 240, a video processor 250, a liquid crystal display (LCD) operating unit 260 and a monitor controller 270.

The first interface unit 210 receives a first video signal from the PC 100, and the second interface unit 220 then receives a second video signal from the set-top box 300.

The monitor input unit 230 receives a mode setting command from a user.

The monitor memory unit 240 stores a variety of information required for the PC 100 to control the monitor 200, for example, information regarding all resolutions supported by the monitor 200, the optimum resolution, the manufacturer, the serial number, the supporting frequency or other information.

The video processor 250 processes the input video signals so that the video signals are divided into red (R), green (G) and blue (B) signals, and outputs the divided signals to the LCD operating unit 260. In this situation, if the user sets a PBP mode through the monitor input unit 230, the video signals input through the first interface unit 210 and second interface unit 220 may be transmitted respectively to the left and right sides of the full screen, and may then be output to the LCD operating unit 260. If a general mode is set, only one video signal input through the first interface unit 210 or the second interface unit 220 may be output to the LCD operating unit 260.

The video processor 250 comprises an OSD generator (not shown). If a command to change to multi-screen display mode is detected, the OSD generator may provide a selection menu through which the user may determine whether to change the resolution according to the size of the split screen.

The LCD operating unit 260 receives the video signal from the video processor 250, and displays video corresponding to the received video on an LCD panel.

The monitor controller 270 controls the entire operation of the monitor 200. The monitor controller 270 detects the command to change to multi-screen display mode. If the command to change to multi-screen display mode is detected, the monitor controller 270 may control a video signal having a resolution changed according to a size of a split screen of a display to be displayed on the split screen.

The monitor controller 270 changes the resolution of the first video signal to half the resolution of the display, and controls the video signal having the changed resolution to be displayed on the split screen. Additionally, if the command to change to multi-screen display mode is detected, the monitor controller 270 may receive the video signal of which the resolution has been changed according to the size of the split screen of the display from an external source, and may control the video signal to be displayed on the split screen.

The monitor controller 270 also receives a video signal having the resolution changed by a scaling operation and controls the video signal to be displayed on the split screen. If the user changes the resolution of the video signal through the selection menu provided from the OSD generator, the monitor controller 270 may cause the video signal of which the resolution has been changed according to the size of the split screen to be displayed on the split screen.

The set-top box 300 transmits a TV video signal, so that the user may watch TV on the monitor 200.

FIG. 3 is a flowchart explaining a resolution setting method according to an exemplary embodiment of the present invention.

The PC controller 140 reads information regarding the monitor 200 from the monitor memory unit 240 of the monitor 200 (S410). Specifically, the PC controller 140 reads information regarding the optimum resolution supported by the monitor 200. If a 24-inch LCD is used as the monitor 200, an optimum resolution may be 1920*1200.

The PC controller 140 then checks the current mode of the monitor 200 (S420).

If the general mode is changed to the PBP mode (S430-Y), the PC controller 140 may control the video card 110 to change the resolution of the first video signal output to the monitor 200 (S440).

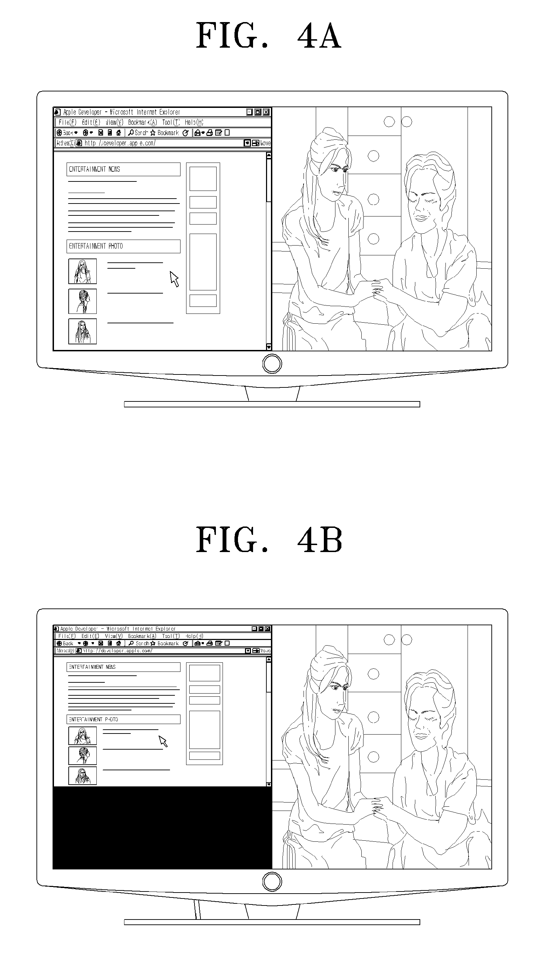

In this situation, various methods may be used to change the resolution. For example, if a PC output video is displayed on the left-hand half of the full screen, as shown in FIG. 4A, the optimum resolution in PBP mode may be set to a value obtained by dividing the horizontal resolution of the optimum resolution of the full screen read from the PC controller 140 in operation S410 by 2. Accordingly, the horizontal resolution of the PC output video may be 960 obtained by dividing 1920 by 2, and the vertical resolution thereof may be 1200, which is identical to the optimum resolution, so the PC output video may have a resolution of 960*1200.

Additionally, if the PC output video is displayed on the left-hand half of the full screen according to a scale of 4:3, as shown in FIG. 4B, the resolution of the PC output video may be determined according to the scale of 4:3. Therefore, the horizontal resolution of the PC output video may be 960 obtained by dividing 1920 by 2, and the vertical resolution thereof may be 720 obtained by multiplying 960 by 3/4, so the PC output video may have a resolution of 960*720.

In this situation, in order to reset the resolution to the original resolution, the original resolution may be stored in the PC memory unit 130.

Next, the video signal having the changed resolution is output (S450).

Alternatively, if the monitor 200 is not in PBP mode (S430-N), that is, if the monitor 200 is in general mode, the PC controller 140 may check whether the mode of the monitor 200 has been changed from PBP mode to general mode.

If it is determined that the mode of the monitor 200 has been changed from PBP mode to general mode (S460-Y), the resolution may change back to the original resolution, which has been stored in operation S430(S470).

The process for determining whether the PBP mode is activated and for changing to the optimum resolution is described in detail according to the exemplary embodiment of the present invention.

Although the PC output video is displayed on the left-hand half of the full screen in this exemplary embodiment of the present invention, the present invention is applicable to a situation in which the full screen is divided into two or more split screens, which may be arranged horizontally and/or vertically or in other configurations.

Additionally, the PC output video and TV output video are displayed separately on the split screens in this exemplary embodiment of the present invention. However, video signals output from various PCs may be divided, and two video signals may be output from a single PC.

Furthermore, the PC is used as a device for changing the resolution in this exemplary embodiment of the present invention, but the present invention is applicable to any host device capable of executing applications and changing the resolution, for example a personal digital assistant (PDA), instead of the PC.

Moreover, the monitor is used as an external device which displays video in this exemplary embodiment of the present invention, but the present invention is applicable to any device capable of displaying split screens in PBP mode, for example a TV.

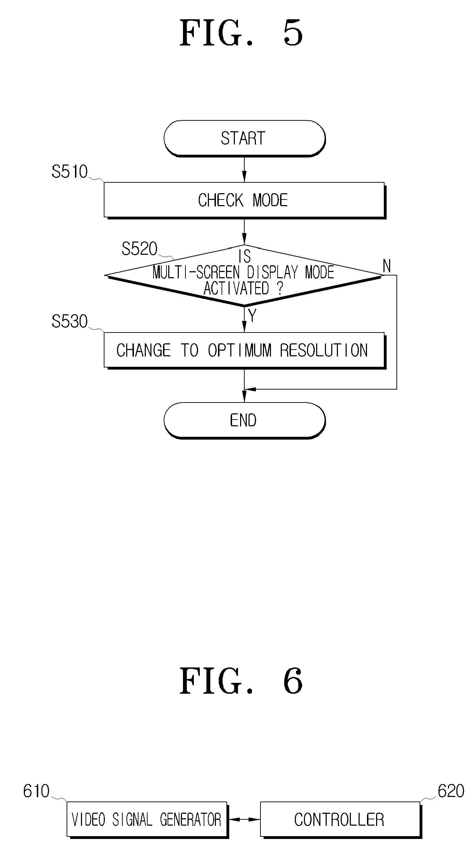

Hereinafter, another exemplary embodiments of the present invention will be described in detail with reference to FIGS. 5, 6 and 7.

According to a resolution setting method shown in FIG. 5, a host device checks the mode of an external display apparatus connected thereto (S510). If it is determined that the external display apparatus is in multi-screen display mode (S520-Y), the host device may change the resolution of the video to be transmitted to the external display apparatus to a resolution most suitable for display on split screens of the external display apparatus on which the video will be displayed (S530).

The host device of FIG. 6 comprises a video signal generator 610 and a controller 620.

The video signal generator 610 generates a video signal. If it is determined that the external display apparatus is in multi-screen display mode, the controller 620 may control the video signal generator 610 to change the resolution of the video to be transmitted to the external display apparatus to a resolution most suitable for display on split screens of the external display apparatus on which the video will be displayed.

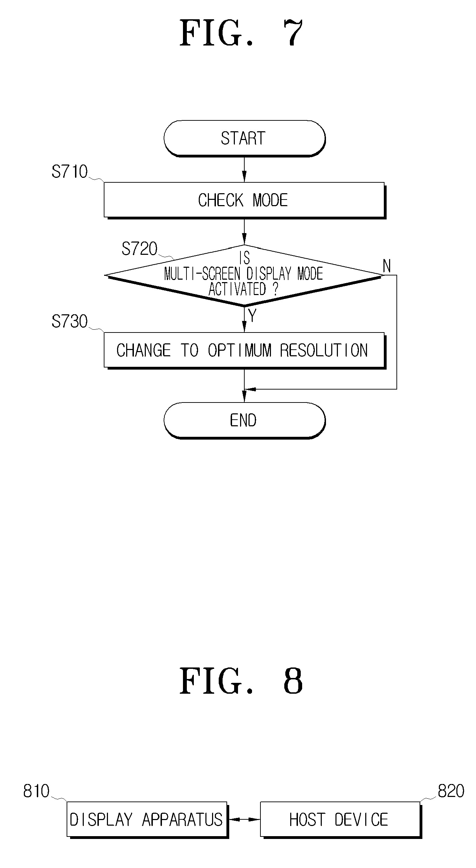

According to a resolution setting method shown in FIG. 7, a program recorded on a recording medium checks the mode of an external display apparatus connected thereto (S710). If it is determined that the external display apparatus is in multi-screen display mode (S720-Y), the program may change the resolution of the video to be transmitted to the external display apparatus to a resolution most suitable for display on split screens of the external display apparatus on which the video will be displayed (S730).

As shown in FIG. 8, a video system according to still another exemplary embodiment of the present invention comprises a display apparatus 810 and a host device 820. The display apparatus 810 displays video received from the host device 820. The host device 820 is connected to the display apparatus 810 and checks the mode of the display apparatus 810. If it is determined that the display apparatus is in multi-screen display mode, the host device 820 may change the resolution of the video to be transmitted to the display apparatus 810 to a resolution most suitable for display on split screens of the display apparatus 810 on which the video will be displayed.

As described above, according to exemplary embodiments of the present invention, when the mode of the display apparatus is changed, the host device may change the resolution of output video to the resolution most suitable for display on split screens. Accordingly, the user does not need to change the resolution one by one every time the PBP mode is activated, so user convenience may be enhanced.

The foregoing exemplary embodiments and advantages are merely exemplary and are not to be construed as limiting the present invention. The present teaching can be readily applied to other types of apparatuses. Also, the description of exemplary embodiments of the present invention is intended to be illustrative, and not to limit the scope of the claims, and many alternatives, modifications, and variations will be apparent to those skilled in the art.

## Claims

1. A display control method comprising:
determining whether a command to change to a multi-screen display mode is detected (S430), (S520), (S720); and
displaying a video on a portion of a screen of a display if the command is detected, the video corresponding to a video signal having a resolution changed according to a size of the portion of the screen of the display (S440, S450), (S530), (S730).

2. The method as claimed in claim 1, wherein the multi-screen display mode is operated to display a first video corresponding to a first video signal received from a first source and a second video corresponding to a second video signal received from a second source, separately on the display.

3. The method as claimed in claim 2, wherein the multi-screen display mode is a picture-by-picture (PBP) mode which displays the first video and the second video on the left-hand side and right-hand side, respectively, of a full screen of the display.

4. The method as claimed in claim 3, wherein the displaying comprises displaying the first video of which a horizontal resolution of the first video signal is changed to half a horizontal resolution of the display on the portion of the screen of the display.

5. The method as claimed in any of the claims 2-4, wherein the first video signal is a signal generated by a computer (100), and the second video signal is generated by a broadcast signal receiving apparatus (300).

6. The method as claimed in any one of claims 1 to 5, wherein the displaying comprises receiving the video signal having the resolution changed according to the size of the portion of the screen of the display from an external source and displaying the video corresponding to the received video signal on the portion of the screen of the display, if the command is detected.

7. The method as claimed in any one of claims 1 to 6, wherein the displaying comprises receiving the video signal from an external source, changing the resolution of the video signal and displaying the video corresponding to the received video signal on the portion of the screen of the display.

8. The method as claimed in any one of claims 1 to 7, further comprising:
displaying a selection menu through which a user may select to change the resolution according to the size of the portion of the screen of the display, if the command is detected,
wherein the displaying the video comprises displaying the video on the portion of the screen of the display if the user selects to change the resolution through the selection menu, the video corresponding to the video signal having the resolution changed according to the size of the portion of the screen of the display.

9. The method as claimed in any one of claims 1 to 8, further comprising:
displaying a selection menu including a menu item which is selectable to change the resolution according to the size of the portion of the screen of the display, if the command is detected,
wherein the displaying the video comprises displaying the video on the portion of the screen of the display if the menu item is selected, the video corresponding to the video signal having the resolution changed according to the size of the portion of the screen of the display.

10. A display apparatus comprising:
a video signal receiver (200) arranged for receiving a video signal; and
a controller (140) arranged for determining whether a command to change a display to a multi-screen display mode is detected, and for controlling the video signal having a resolution changed according to a size of a portion of a screen of the display to be displayed on the portion of the screen of the display if the command is detected.

11. The display apparatus as claimed in claim 10, further comprising:
an on-screen-display (OSD) generator arranged for providing a selection menu through which a user may select to change the resolution according to the size of the portion of the screen of the display, if the command is detected,
wherein the controller (140) is further arranged for controlling the video signal having the resolution changed according to the size of the portion of the screen of the display to be displayed on the portion of the screen of the display, if the user selects to change the resolution through the selection menu of the OSD generator.

12. The display apparatus as claimed in claims 10 or 11, further comprising:
an on-screen-display (OSD) generator arranged for providing a selection menu including a menu item which is selectable to change the resolution according to the size of the portion of the screen of the display, if the command is detected,
wherein the controller (140) is further arranged for controlling the video signal having the resolution changed according to the size of the portion of the screen of the display to be displayed on the portion of the screen of the display, if the menu item is selected.

13. A display system comprising:
a display apparatus (810) of any one of claims 10 to 12 which displays a video corresponding to a video signal; and
a host device (820) arranged for determining whether a command to change the display apparatus to a multi-screen display mode is detected, for generating the video signal having a resolution changed according to a size of a portion of a screen of the display apparatus, and for controlling the generated video signal to be displayed on the portion of the screen of the display apparatus if the command is detected.

14. The display system as claimed in claim 13, wherein the display apparatus (810) being further arranged for providing a selection menu through which a user may select to change the resolution according to the size of the portion of the screen of the display apparatus, if the command is detected, and
the host device (820) being further arranged for controlling the video signal having the resolution changed according to the size of the portion of the screen of the display apparatus to be displayed on the portion of the screen of the display apparatus, if the user selects to change the resolution through the selection menu.

15. The display system as claimed in claims 13 or 14, wherein the display apparatus (810) being further arranged for providing a selection menu including a menu item which is selectable to change the resolution according to the size of the portion of the screen of the display apparatus, if the command is detected, and
the host device (820) being further arranged for controlling the video signal having the resolution changed according to the size of the portion of the screen of the display apparatus to be displayed on the portion of the screen of the display apparatus, if the menu item is selected.
